# EUROPÄISCHE PATENTSCHRIFT

(11) **EP 0 438 485 B1**
(45) Veröffentlichungstag und Bekanntmachung des Hinweises auf die Patenterteilung: **30.06.1993**
(21) Anmeldenummer: 89911805.3
(22) Anmeldetag: 10.10.1989
(51) Int. Cl.: F04D 29/04, F16C 23/02, H02K 15/16

(54) **WELLENLAGERUNG EINER SPALTROHRMOTORPUMPE**
BEARING FOR THE SHAFT OF A CANNED MOTOR PUMP
PALIER D'ARBRE POUR POMPE A MOTEUR A GAINE

(30) Priorität: 13.10.1988 DE 3834862
(43) Veröffentlichungstag der Anmeldung: 31.07.1991
(73) Patentinhaber: KSB Aktiengesellschaft, 67227 Frankenthal (DE)
(72) Erfinder: HEINRICH, Hansjörg, D-8566 Leinburg (DE); RUPPRECHT, Peter, D-8580 Bayreuth (DE)
(86) Internationale Anmeldenummer: EP8901193
(87) Internationale Veröffentlichungsnummer: WO9004111

(56) Entgegenhaltungen:
- EP-A- 0 021 030
- DE-B- 1 528 718
- DE-C- 362 269
- DE-C- 943 868

## Beschreibung

Die Erfindung betrifft eine Lagerung für das pumpenabgewandte Wellenende einer Spaltrohrmotorpumpe, mit einer das Wellenende umschließenden Gleitlagerbuchse.

Derartige Lagerungen sind z.B. aus EP-A-0 021 030 bekannt.

Die Befestigung, mehr noch, die Auswechselbarkeit der Lagerbuchsen bringen eine die Gehäusegestaltung und die Lebensdauer derartiger Aggregate betreffende Problematik mit sich. Dem Fachmann standen bisher zwei alternative Lageranordnungen zur Verfügung, die beide mit Nachteilen verbunden waren.

Entschied er sich für die erste Alternative, das Einpressen der Lagerbuchsen, so mußte er eine Gehäusegestaltung für den Spaltrohrmotor vorsehen, die das Öffnen der Gehäusewand und das Entfernen des die Lagerbuchse tragenden Gehäuseteils erlaubte. Eine solche Gestaltung, die die zusätzliche Anordnung von Dicht- und Zentrierflächen mit sich brachte, machten diese Lösung zwangsläufig aufwendig und kompliziert.

Eine weniger komplizierte und mit geringerem Aufwand verbundene Lösung bestand darin, die Lagerbuchse in eine gehäuseseitige Aufnahme einzuklemmen. Hierdurch wurde es möglich, das Motorgehäuse auf der pumpenabgewandten Seite mit einer geschlossenen Wand auszubilden. Allerdings wurde hierbei auch ein wesentlicher Nachteil eingehandelt: Die gewählte Befestigungsart, das Einklemmen, erbringt nicht die an sich notwendige Fluchtgenauigkeit zwischen vorderem und hinterem Gleitlager. Hieraus können sich Probleme bei der Montage der Spaltrohrpumpe, Funktionsstörungen und ein frühzeitiger Verschleiß ergeben.

Der Erfindung liegt die Aufgabe zugrunde, eine Lagerung der eingangs genannten Art zu schaffen, die das Auswechseln der Gleitlagerbuchse auf der pumpenabgewandten Seite des Spaltrohrmotors von der Pumpenseite her zuläßt und die die Einhaltung der Fluchtgenauigkeit zur pumpenseitigen Gleitlagerbuchse gewährleistet.

Die gestellte Aufgabe wird erfindungsgemäß gelöst durch eine die Gleitlagerbuchse tragende Einsatzhülse, die über ein Gewinde und einen dem Gewinde benachbarten, die Einsatzhülse zentrierenden Konus mit dem Gehäuse der Spaltrohrmotorpumpe lösbar verbunden ist.

Die mit Gewinde und zentrierendem Konus versehene Einsatzhülse legt die Position der von ihr getragenen Einsatzhülse mit wiederholbarer Genauigkeit fest. Ein Austausch der Lagerhülse ist somit durch einen einfachen Schraubvorgang, beispielsweise mit Hilfe eines Steckschlüssels, nach einem Ausbau der Rotorwelle leicht möglich.

In zweckmäßiger Ausgestaltung der Erfindung sind mehrere axial verlaufende Nuten im Bereich der die Gleitlagerbuchse umschließenden Fläche der Einsatzhülse vorgesehen. Die Nuten bilden Kanäle für den über das Lager geführten Kühlstrom des Spaltrohrmotors und reduzieren den Durchflußwiderstand.

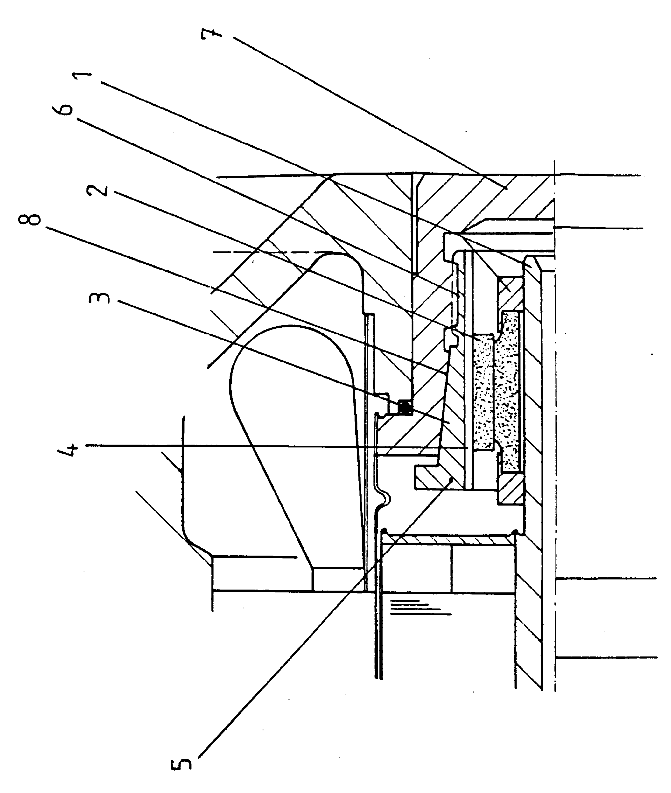

Anhand eines Ausführungsbeispiels wird die Erfindung näher erläutert. Die Zeichnung zeigt einen Ausschnitt aus dem Motor einer Spaltrohrmotorpumpe im Bereich des pumpenabgewandten Wellenendes.

Das Wellenende (1) wird umschlossen von einer Gleitlagerbuchse (2), die in eine Einsatzhülse (3) eingepreßt ist. In der Innenwand der Einsatzhülse (3) sind mehrere über den Umfang verteilte Nuten (4) angeordnet.

Die mit einem Sechskantkopf (5) versehene Einsatzhülse (3) ist mit einem Gewinde (6) ausgestattet, welches eine lösbare Verbindung mit dem Gehäuse (7) des Spaltrohrmotors herstellt. Zwischen dem Sechskantkopf (5) und dem Gewinde (6) ist ein Konus (8) gelegen, der im Zusammenwirken mit einer entsprechend gearteten Gegenfläche des Gehäuses (7) die Gleitlagerbuchse (2) zentriert.

## Patentansprüche

1. Lagerung für das pumpenabgewandte Wellenende einer Spaltrohrmotorpumpe, mit einer das Wellenende umschließenden Gleitlagerbuchse, **gekennzeichnet durch** eine die Gleitlagerbuchse (2) tragende Einsatzhülse (3), die über ein Gewinde (6) und einen dem Gewinde (6) benachbarten, die Einsatzhülse (3) zentrierenden Konus (8) mit dem Gehäuse (7) der Spaltrohrmotorpumpe lösbar verbunden ist.

2. Lagerung nach Anspruch 1, gekennzeichnet durch mehrere axial verlaufende Nuten (4) im Bereich der die Gleitlagerbuchse (2) umschließenden Fläche der Einsatzhülse (3).

## Claims

1. A bearing means for the shaft end remote from the pump of a canned motor pump, comprising a plain bearing bushing encircling the shaft end, characterized by an inserted sleeve (3) carrying the plain bearing bushing (2) and which is detachably connected via screw thread (6) and a conical member (8) which is adjacent to the screw thread (6) and centers the inserted sleeve (3), with the housing (7) of the canned motor pump.

2. The bearing means as claimed in claim 1, characterized by a plurality of grooves (4) extending axially in the surface encircling the plain bearing bushing (2), of the inserted sleeve (3).

## Revendications

1. Logement pour l'extrémité de l'arbre d'une pompe de moteur à gaine située du côté opposé à la pompe, caractérisé par une douille d'insert (3) portant la douille de palier de glissement (2) qui est liée de façon amovible au boîtier (7) de la pompe à moteur à gaine par l'intermédiaire d'un filet (6) et d'un cône voisin du filet (6) et centrant la douille d'insert (3).

2. Logement selon la revendication 1 caractérisé par plusieurs rainures (4) de direction axiale dans la zone de la surface de la douille d'insert (3) qui entoure la douille de palier de glissement (2).
